(19) **Europäisches Patentamt**

**European Patent Office**

**Office européen des brevets**

(11) **EP 0 762 127 B1**

(12) **EUROPÄISCHE PATENTSCHRIFT**

(45) Veröffentlichungstag und Bekanntmachung des Hinweises auf die Patenterteilung:
**20.03.2002 Patentblatt 2002/12**

(51) Int Cl.⁷: **G01P 3/36**

(21) Anmeldenummer: **96114138.9**

(22) Anmeldetag: **04.09.1996**

(54) **Verfahren und Anordnung zur berührungslosen Längenmessung**

Method and device for non-contact speed measurement

Procédé et dispositif de mesure de vitesse sans contact

(84) Benannte Vertragsstaaten:
**BE DE GB IT NL SE**

(30) Priorität: **05.09.1995 DE 19532749**

(43) Veröffentlichungstag der Anmeldung:
**12.03.1997 Patentblatt 1997/11**

(73) Patentinhaber:
• **Michel, Klaus**
  **18055 Rostock (DE)**
• **Christofori, Klaus**
  **D-18069 Rostock (DE)**
• **Richter, Andreas**
  **18069 Rostock (DE)**

(72) Erfinder:
• **Michel, Klaus**
  **18055 Rostock (DE)**
• **Christofori, Klaus**
  **D-18069 Rostock (DE)**
• **Richter, Andreas**
  **18069 Rostock (DE)**

(74) Vertreter: **Schnick, Achim et al**
**Schnick & Fiebig Patentanwälte**
**Schonenfahrerstrasse 7**
**18057 Rostock (DE)**

(56) Entgegenhaltungen:
**EP-A- 0 516 301**      **EP-A- 0 522 815**
**DE-A- 3 229 343**      **DE-U- 9 419 913**
**GB-A- 2 130 453**      **US-A- 4 218 623**

**Beschreibung**

Die vorliegende Erfindung betrifft ein Verfahren zur Längenmessung von sich bewegenden Objekten bzw. Objektoberflächen auf der Grundlage einer berührungslosen Geschwindigkeitsmessung. Zu den klassischen Meßmitteln für diese Aufgabe gehören abrollende Meßmaschinen. Diese sind dadurch gekennzeichnet, daß sie die zu messende Länge durch Abrollen eines Meßrades mit definiertem Umfang bestimmen. Der über einen Impulsgeber diskretisierte Drehwinkel des Meßrades ist dann ein Maß für die Länge (R. Mann; P. Zervos: Meßmaschinen für Längen- und Flächenmessung. PTB-Prüfregeln, Band 1, Braunschweig, 1980). Diesen mechanischen Meßsystemen sind hinsichtlich Meßgenauigkeit und Robustheit Grenzen gesetzt (W. Schwab: Meßprinzip LV 504. Sparpotentiale ausschöpfen durch eine exakte Längenmessung. Drahtwelt, Heft 3, 1994). Für Messungen auf aggressiven, heißen oder empfindlichen Oberflächen sind diese Systeme sogar ungeeignet.

Aus diesen Gründen sind eine Reihe von optischen Verfahren zur berührungslosen Messung entwickelt worden. Dazu zählen Laufzeitkorrelatoren oder Doppler-Velocimeter (P. Zervos: Ein Verfahren zur Längenmessung bewegten Meßgutes nach dem Doppler-Effekt. PTB-Bericht Me-63, Braunschweig, 1984). Bei der Messung niedriger Geschwindigkeiten stoßen diese Verfahren jedoch an ihre Grenzen.

Aus DE 40 35 039 A1 ist die Verwendung eines CCD-Zeilensensors als eines nach dem Ortsfilterprinzip arbeitenden gitterartig strukturierten Detektors bekannt. Auf diesem Prinzip basierende Verfahren nutzen die Filterwirkung gitterförmiger Strukturen, um eine geschwindigkeitsproportionale Frequenz zu gewinnen. Das Zeitintegral über die gemessene Momentangeschwindigkeit liefert den gewünschten Längenwert. Dieses Verfahren ist jedoch nicht in der Lage, zusätzlich auch den Richtungssinn der Bewegung zu detektieren. Die Möglichkeiten zur Messung sehr geringer Geschwindigkeiten sind ebenfalls stark eingeschränkt.

Ein auf dem Prinzip der Ortsfrequenzfilterung aufbauender Sensor für Relativbewegungen zu einer Bezugsfläche ist auch aus DE-A-32 29 343 bekannt. Eine Gittermodulation zur vorteilhaften Messung geringer Geschwindigkeiten wird jedoch nicht nahegelegt.

EP-A-0 522 815 realisiert auch eine Frequenzverschiebung, jedoch rein mechanisch durch Bewegung des gesamten Empfängers bzw. durch ein zusätzliches elektrooptisches Bauelement im Strahlengang. Beide Verfahren eignen sich nicht für die hochauflösende Geschwindigkeitsmessung entsprechend der vorliegenden Aufgabenstellung, da für die Erfassung geringer Geschwindigkeiten eine. elektronische Shiftung benötigt wird, um die erforderliche Signalqualität zu gewährleisten. Mechanische Lösungen in Form bewegter oder rotierender Gitter sind dem Fachmann seit langem bekannt (E. Delingat: Berührungslose optische Geschwindigkeits- und Abstandsmessung. Leitz-Mitteilungen Wissenschaft und Technik VI (1976), Nr. 7, S. 249-257). Zu erwartende Gleichlaufschwankungen derartiger Lösungen sind dem Meßeffekt automatisch überlagert und beeinträchtigen die Meßgenauigkeit erheblich. In einem weiteren Ausführungsbeispiel von EP-A-0 522 815 beeinflußt eine zwischen der Empfangsoptik und dem festen Gitter angeordnete LCD-Matrix den Strahlengang. Dieser Lösungsweg ist ebenfalls seit langem bekannt, ist jedoch überaus aufwendig und auf geringe Frequenzverschiebungen begrenzt.

In US-A-4 218 623 wird ein elektrisches Wechselfeld an einen gitterartig strukturierten Sensor angelegt. Dieser Sensor dient jedoch nur zur Detektion der örtlichen Verschiebung eines Bildes und wertet die Phasendifferenz zwischen dem Ausgangssignal und einem der angelegten Wechselsignale aus. Eine direkte Geschwindigkeits- oder Längenmessung ist nicht möglich.

Aus DE-U-94 19 913 ist ebenfalls ein Sensor zur Erfassung von Bewegungen relativ zu einer Bezugsfläche bekannt, wobei die Ortswellenlänge des Gitters durch die Zusammenfassung einer unterschiedlichen Anzahl von Gitterelementen stufenförmig verändert werden kann. Eine Modulation des Gitters zur vorteilhaften Messung geringer Geschwindigkeiten wird nicht nahegelegt.

Ein Geschwindigkeitsmeßgerät auf der Basis einer CCD ist aus EP-A-0 516 301 bekannt. Es verfügt über eine Möglichkeit zur Richtungsdetektion. Die Möglichkeiten zur Messung sehr geringer Geschwindigkeiten sind ebenfalls stark eingeschränkt.

Zu den optoelektronischen Verfahren zur Längenmessung zählen weiterhin inkrementale Meßverfahren, bei denen die Weginformation auf einem Teilungsträger in Form von Inkrementen (regelmäßigen Markierungen) vorliegt. Die hochgenaue Maßverkörperung ist in diesen Fällen nur mit hohem Aufwand zu realisieren, da beispielsweise mechanische Belastungen des Maßstabes und dessen temparaturabhängige Ausdehnung zu berücksichtigen sind (G. Ulbers: Vergleich inkrementaler Wegmeßsysteme. In: Laser in der Technik, Vorträge Laser 93, Springer-Verlag, 1994).

Aufgabe der vorliegenden Erfindung ist es, durch ein geeignetes Verfahren die Bestimmung der Frequenz vorzunehmen, um daraus die Geschwindigkeitsinformation zu gewinnen, um im Ergebnis die Länge sich bewegender Objektoberflächen hochgenau ermitteln zu können.

Die Aufgabe wird erfindungsgemäß gelöst durch ein Verfahren nach Anspruch 1.

Weiterbildungen und vorteilhafte Ausgestaltungen der Erfindung ergeben sich aus den Ansprüchen, der weiteren Beschreibung und der Zeichnung, die ein Ausführungsbeispiel veranschaulicht.

In der Zeichnung zeigen:

**Fig. 1** eine schematische Darstellung einer bevorzugten Ausführungsform eines Gerätes zur Durchführung des Verfahrens zur Längenmessung,

Fig. 2     eine schematische Darstellung des Sensors mit aktiver Sensorfläche und Signalvorverarbeitung,

Fig. 3     eine schematische Schnittdarstellung des Sensors,

Fig. 4     eine schematische Darstellung der Verstärkerstufe,

Fig. 5     einen Kompaktsensor.

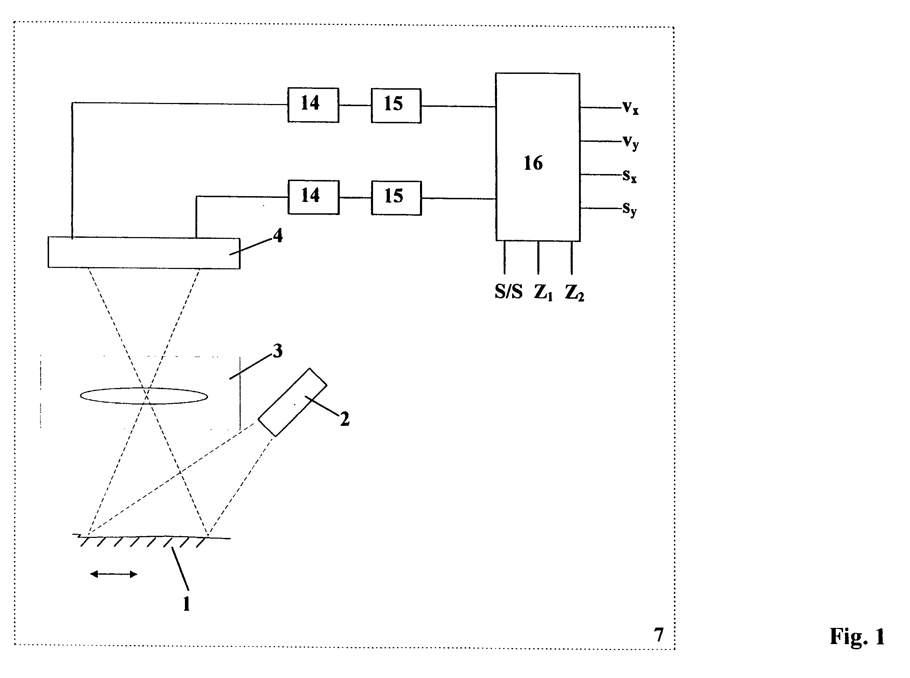

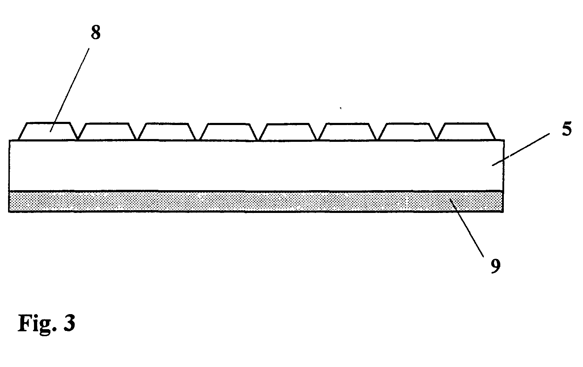

**Fig.1** zeigt den prinzipiellen Aufbau eines Gerätes zur Längenmessung. Die sich bewegende Objektoberfläche **1** wird über eine Optik auf einen Sensor **4** abgebildet, wobei die Optik **3** den Maßstab der Abbildung festlegt. Der entsprechende Ausschnitt der Objektoberfläche wird mittels einer Beleuchtung **2** ausgeleuchtet. Der Sensor **4** besteht aus einem Halbleiter-Substrat **5** und optoelektronischen Wandlern, die eine aktive Fläche besitzen, auf der die Bildinformation abgebildet wird. Der Aufbau des Sensors einer erfindungsgemäßen Variante wird aus der Schnittdarstellung **Fig. 3** ersichtlich. Der Sensor **4** besitzt 2 Ausgänge, an denen jeweils ein Tiefpaß **14** und ein Frequenzmesser **15** angeschlossen sind. Die beiden Frequenzmesser sind an eine Auswerteeinheit **16** angeschlossen. Es ist auch in einem weiteren Ausführungsbeispiel vorgesehen, an Stelle der Tiefpässe Bandpässe für die Signalfilterung einzusetzen.

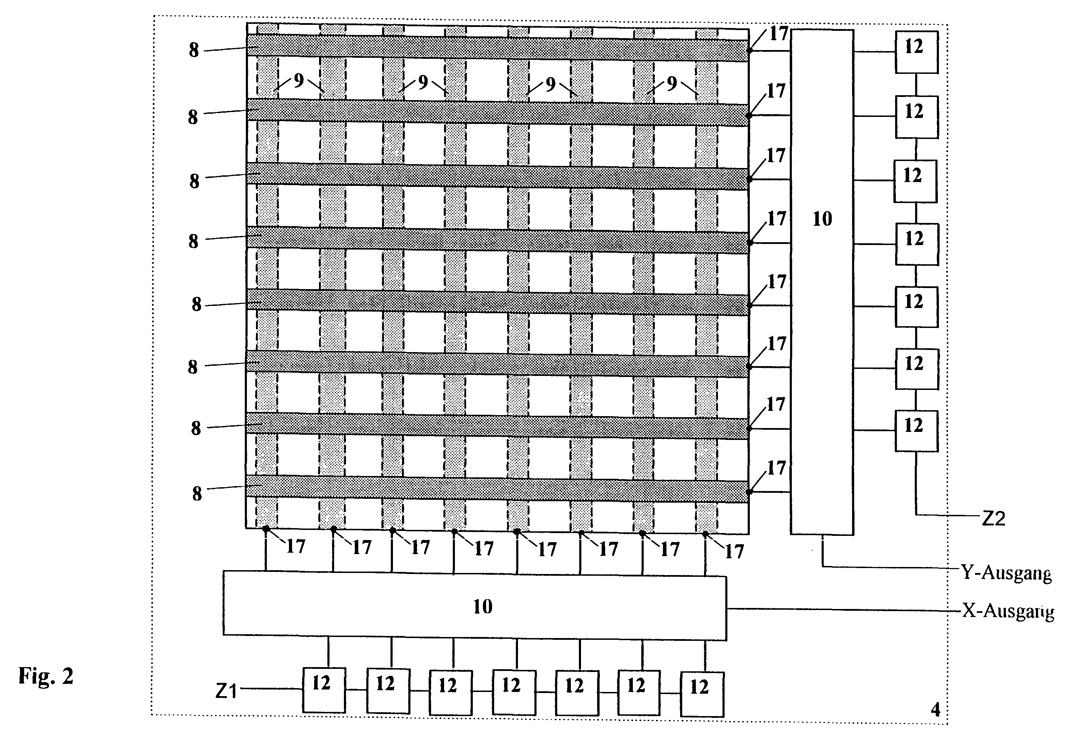

Das Ausführungsbeispiel beinhaltet den Sensor **4**, der eine zweidimensionale Geschwindigkeits- und Längenmessung ermöglicht, bestehend aus einer aktiven Detektorfläche auf der bilateral um 90° versetzte, mit unterschiedlichen Potentialen angesteuerte Kontaktstreifen **8, 9** aufgebracht sind **(Fig. 2)**. Auf der lichtzugewandten Seite sind die Kontaktstreifen **8** horizontal angeordnet. Auf der lichtabgewandten Seite sind die Kontaktstreifen **9** vertikal angeordnet. Die Elektroden **17** der Kontaktstreifen sind einzeln auf die Verstärkerstufe **10** geführt. Die Verstärkerstufe **10** verfügt weiterhin über m Steuereingänge an denen jeweils eine Verzögerungsschaltung **12** angeschlossen ist.

Die Wechselwirkungen der Kontaktstreifen untereinander führen zur Ausbildung räumlich begrenzter, gekreuzter Gitterstrukturen im Raumladungsgebiet, indem einfallende Photonen in Abhängigkeit von ihrem Auftreffort in der Streifenstruktur unterschiedliche Photoströme bewirken, wobei die Kontakte durch Streifenanoden und -katoden oder MOS-Strukturen gebildet werden können.

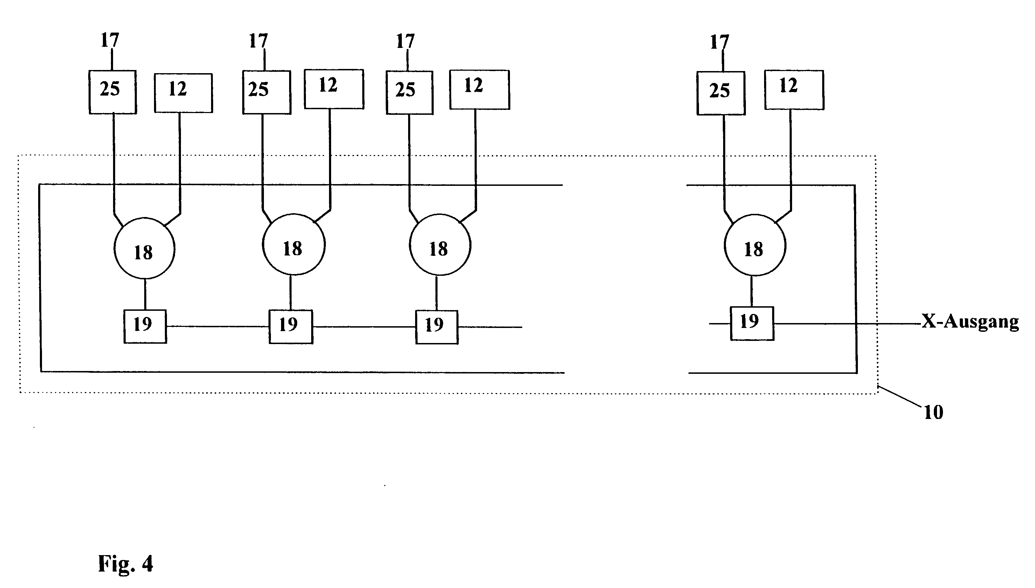

**Fig. 4** zeigt den internen Aufbau der Verstärkerstufe **10** in schematischer Darstellung. Die Verstärkerstufe besteht je Kontaktstreifen aus einem Transimpedanzverstärker 25, einem Multiplizierer **18** und einem Summierer **19**. Die Kontaktstreifen werden über Transimpedanzverstärker mit dem Eingang eines jedem Kontaktstreifen zugeordneten Multiplizierers verbunden, wobei an den zweiten Eingang ein periodisches, vorzugsweise sinusförmiges Steuersignal angelegt wird, dessen Phase gegenüber benachbarten Steuereingängen um $\Delta\phi_x$ bzw. $\Delta\phi_y$ unter der Bedingung $n_x$ x $\Delta\phi_x$ = 180° mit $n_x$ = 1,2,3... bzw. $n_y$ x $\Delta\phi_y$ = 180° mit $n_y$ = 1,2,3... phasenverschoben ist, mit dem Ziel eine Modulation der Empfindlichkeitsverteilung zu erreichen und damit der Gitterstruktur eine virtuelle Shiftbewegung zu geben. Die Phasenverschiebungen werden durch die Verzögerungsschaltungen **12** realisiert.

Aus den Ausgangssignalen aller Multiplizierer **18** einer Kontaktstreifenrichtung wird jeweils ein Summensignal gebildet, dessen Frequenz sich in Abhängigkeit von der Relativbewegungsrichtung als Summe oder Differenz aus der Frequenz des Steuersignals und der Ausgangsfrequenzen $f_x$ bzw. $f_y$ ergibt, wobei sich letztere aus den Geschwindigkeitskomponenten des Objektes $v_x$ bzw. $v_y$ zu

$$f_x = m\, v_x / (2\, n_x\, l_x)\ \text{bzw.}\ f_y = m\, v_y / (2\, n_y\, l_y)$$

ergeben (mit m als Abbildungsmaßstab und $l_x$ bzw. $l_y$ als dem Abstand der Kontaktstreifen).

Ein weiteres Ausführungsbeispiel nutzt als optoelektronische Wandler Phototransistoren. Die Phototransistoren befinden sich auf dem gemeinsamen Halbleiter-Substrat **5** als Array in Zeilen und Spalten angeordnet. Die Phototransistoren sind beispielsweise als MOSFET ausgeführt, wobei Source und Drain zeilen- bzw. spaltenweise verbunden sind. Bei der Ausführung als Sourceschaltung werden die Drainanschlüsse über einen Arbeitswiderstand an die Betriebsspannung angeschlossen. Über die Sourceanschlüsse wird eine der Lichtintensität proportionale Spannung ausgekoppelt. Es ist auch vorgesehen, anstelle des einen Phototransistors für jede Zeilen- und Spaltenposition mehrere Transistoren zu verwenden.

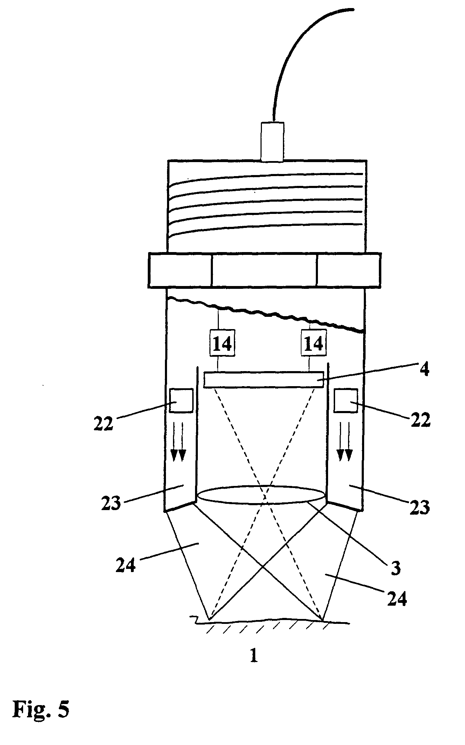

Über die Gateanschlüsse der Phototransistoren wird die Einstellung der Verstärkung und damit eine Dynamikanpassung an die Intensität des einfallenden Lichts realisiert. Die Dynamikanpassung an die Intensität des einfallenden Lichtes kann durch einen Regelkreis automatisch erfolgen, so daß der Sensor sich an unterschiedliche Materialoberflächen selbständig anpassen kann. Zusätzlich ist in dem erfindungsgemäßen Ausführungsbeispiel nach **Fig. 5** eine Helligkeitsregelung der Beleuchtung vorgesehen.

Werden die Gates mit phasenverschobenen, vorzugsweise sinusförmigen Steuerspannungen beaufschlagt, wird die ortsabhängige Gittermodulation derart beeinflußt, daß eine virtuelle Shiftbewegung zustande kommt.

In einem weiteren Ausführungsbeispiel ist es vorgesehen, jeder Spalte und jeder Zeile für die zugehörigen Gates einen unterschiedlichen Spannungsteiler zuzuordnen. Der Spannungsteiler teilt die Steuerspannung entsprechend einem vorher festgelegtem Verhältnis, wodurch beispielsweise die optoelektronischen Wandler am Rande des Sensors geringer als in der Mitte bewertet werden. Dadurch ist dem erfindungsgemäßem Gitter eine Einhüllende einbeschrieben. Dies führt zu einer vorteilhaften Beeinflussung der Signaleigenschaften des Sensors.

In einem weiteren Ausführungsbeispiel befindet sich auf dem Halbleiter-Substrat **5** erfindungsgemäß eine Vollflächendiode **6**, wobei durch Mehrfachkontaktierungen ein optoelektronisches Wandlerarray gebildet wird. Durch Anlegen eines elektrischen Wechselfeldes an die Elektroden **17** der Mehrfachkontaktierungen wird eine gitterförmige, ortsveränderliche Empfindlichkeit eingestellt, wobei die Frequenz des Wechsetfeldes die Geschwindigkeit der Änderung der Empfindlichkeit bestimmt. Das Gitter wird durch die Feldwirkung des an die Elektroden angelegten Wechselfeldes gebildet.

Eine Bewertung der einfallenden Lichtphotonen wird durch eine ortsabhängige Empfindlichkeit derart vorgenommen, daß eine Gittermodulation entsteht. Die Ortswellenlänge des Gitters ist über die Anzahl der Kontaktierungen veränderbar. Auf einen Kontaktstreifen **8, 9** können beliebig viele Kontaktierungen aufgebracht werden. Einzelne Kontaktierungen können nachträglich elektrisch zusammengelegt werden. Dadurch kann das Gitter vorteilhaft an die Objektstruktur angepaßt werden. Durch das Wechselfeld entsteht ein ortsveränderliches Gitter, wobei die Geschwindigkeit des Gitters von der Frequenz des Wechselfeldes, dem Abstand der Kontaktierungen und der Phasenverschiebung zwischen benachbarten Kontaktierungen abhängig ist. Durch die Verwendung des Wechselfeldes ist das Meßsystem in der Lage, Stillstand sowie Vorwärts- und Rückwärtsbewegung der Objektoberfläche zu erkennen und zu unterscheiden. Bei Stillstand registriert der Frequenzmesser **15** die Frequenz des Wechselfeldes. Stimmen die Bewegungsrichtungen von Objektoberfläche **1** und der virtuellen Shiftbewegung des Gitters überein, ergibt sich am Ausgang des Tiefpasses **14** eine resultierende Frequenz, die der Differenz aus der Frequenz des Wechselfeldes und der Frequenz der Gittermodulation entspricht. Sind die Bewegungsrichtungen der Objektoberfläche **1** und gegensinnig, ergibt sich am Ausgang des Tiefpasses **14** die Summe aus der Frequenz des Wechselfeldes und der Frequenz der Gittermodulation. Damit kann der Richtungssinn einer Bewegung eindeutig erfaßt werden. Es können auch weiterhin vorteilhaft sehr geringe Bewegungsgeschwindigkeiten aufgelöst werden. Durch das zeitliche Integral der Geschwindigkeit ergibt sich die resultierende Länge der unter dem Sensor hindurch bewegten Objektoberfläche.

Die Auswerteeinheit **16** besitzt mehrere Ausgabekanäle für die Ausgabe der x- und y-Komponenten der Geschwindigkeit, die jeweils zugehörigen zurückgelegten Wege sowie zwei mit $Z_1$ und $Z_2$ bezeichnete Impulsausgänge. Die Impulsausgänge liefern um $\pm 90°$ versetzte Impulse, wobei im Vorzeichen dieses Phasenversatzes die Richtungsinformation kodiert ist. Damit kann das erfindungsgemäße Längenmeßsystem **7** anstelle der bekannten Encoder an eine Industrieanlage angeschlossen werden. Die Impulsanzahl steht dann für die zurückgelegte Länge, wobei die Pulszahl z.B. in Impulse/mm programmierbar ist. Der Kompaktsensor ist erfindungsgemäß auf seiner Mantelfläche mit einem Gewinde versehen und kann somit an jeder Anlage einfach montiert werden.

**Fig. 5** zeigt den Kompaktsensor als ein weiteres Ausführungsbeispiel. Hier ist der Sensor **4** konstruktiv in einen Zylinder eingepaßt. Es handelt sich hierbei um einen rotationssymmetrischen Aufbau, bei dem die Beleuchtung in Form von 2 Strahlungsquellen **22** seitlich vom Sensor angeordnet ist. Das Licht der Strahlungsquellen wird durch jeweils einen Lichtschacht und eine Strahlumlenkung auf die Objektoberfläche geleitet, wobei eine Überdeckung der Lichtkegel **24** mit der erfaßten Objektoberfläche entsteht. Eine weitere Variante ist es, nur eine Strahlungsquelle zu betreiben. Für die Strahlungsquelle ist vorzugsweise eine Lichtemitterdiode vorgesehen. Eine weitere Variante beinhaltet für die Strahlungsquelle eine Laserdiode.

## Patentansprüche

1. Verfahren zur berührungslosen Geschwindigkeitsmessung von sich bewegenden Objektoberflächen mit einem Sensor (4), bestehend aus einem Halbleiter-Substrat (5), auf dem sich zeilen- oder spaltenweise über jeweils einen der Kontaktstreifen (8, 9) zusammengefaßte Wandler eines optoelektronischen Wandlerarrays befinden, einer Signalvorverarbeitung und einer Optik (3), die den Maßstab der Abbildung der Objektoberfläche auf das Wandlerray festlegt, sowie einer Beleuchtung (2) zur Ausleuchtung der sich bewegenden Objektoberfläche (1), *dadurch gekennzeichnet,* **daß** durch Anlegen eines elektrischen Wechselfeldes an die Elektroden (17) der Kontaktstreifen (8, 9) eine gitterförmige, ortsveränderliche Empfindlichkeitsverteilung eingestellt wird, und die Frequenz des Wechselfeldes die Geschwindigkeit der scheinbaren Bewegung dieser Empfindlichkeitsverteilung bestimmt und durch Auswertung der Summensignale der beiden Kontaktstreifenrichtungen zwei Geschwindigkeitskomponenten ermittelt werden.

2. Verfahren nach Anspruch 1, *dadurch gekennzeichnet,* **daß** eine Bewertung der einfallenden Lichtphotonen durch eine ortsabhängige Empfindlichkeit derart vorgenommen wird, daß eine Gittermodulation entsteht und die Ortswellenlänge des Gitters veränderbar ist.

3. Anordnung zur berührungslosen Geschwindigkeitsmessung von sich bewegenden Objektoberflächen mit einem Sensor (4) mit optoelektronischen Wandlern, die eine aktive Fläche besitzen, auf die eine Bildinformation abgebildet wird und einer Optik (3), die den Maßstab der Abbildung festlegt sowie einer Beleuchtung (2) zur Ausleuchtung der sich bewegenden Objektoberfläche (1), wobei die optoelektronischen Wandler sich auf einem gemeinsamen Halbleiter-Substrat (5) befinden und mittels Kontaktstreifen (8,9) zeilen- und spaltenweise zusammengefaßt werden, **dadurch gekennzeichnet, daß** die Kontaktstreifen (8,9) sowohl als halbdurchlässige Kontaktstreifen (8) spaltenweise auf der lichtzugewandten Seite des Substrates aufgebracht sind, als auch als Kontaktstreifen (9) zeilenweise auf der Substratunterseite bzw. lichtabgewandten Seite aufgebracht sind und der Sensor zwei m-kanalige Verstärkerstufen (10) mit m Steuereingängen (11) enthält, die über eine Verzögerungsschaltung (12) miteinander verbunden sind, wobei die Verstärkerstufe (10) jeweils einmal für die Zeilen und einmal für die Spalten vorhanden ist, und jede Verstärkerstufe (10) über einen Ausgang verfügt, dem jeweils ein Tiefpaß (14) nachgeschaltet ist und die Ausgänge der Tiefpässe (14) auf Frequenzmesser (15) geführt sind, denen sich eine Auswerteeinheit (16) anschließt.

4. Anordnung nach Anspruch 3, **dadurch gekennzeichnet, daß** die m-kanalige Verstärkerstufe (10) je Kanal einen Multiplizierer (18) enthält, wobei der Signaleingang des Multiplizierers (18) an die Elektrode (17) des Kontaktstreifens angeschlossen ist und der zugehörige Steuereingang mit der aus (m-1) Stufen vorzugsweise gleicher Verzögerung bestehenden Verzögerungsschaltung (12) verbunden ist und der jeweilige Ausgang über einen Summierer (19) auf den Ausgang der Verstärkerstufe aufgeschaltet ist.

5. , Anordnung nach Anspruch 3, **dadurch gekennzeichnet, daß** sich der Sensor (4), die Tiefpässe (14), die Frequenzmesser (15) und die Auswerteeinheit (16) in einem Chip befinden und vorzugsweise auf einem gemeinsamen Substrat angeordnet sind.

6. Anordnung nach Anspruch 3, **dadurch gekennzeichnet, daß** der Sensor (4) und die Optik (3) in einem Zylinder (21) angeordnet sind und zwei Strahlungsquellen (22) seitlich des Sensors angeordnet sind, wobei den Strahlungsquellen jeweils ein Lichtschacht (23) nachgeordnet ist mit einer Strahlumlenkung derart, daß eine Überdeckung der Lichtkegel (24) mit der erfaßten Objektoberfläche besteht.

7. Anordnung nach Anspruch 6, **dadurch gekennzeichnet, daß** der Zylinder (21) auf seiner Mantelfläche mit einem Gewinde versehen ist.

8. Anordnung nach Anspruch 6, **dadurch gekennzeichnet, daß** für die Strahlungsquellen (22) Lichtemitterdioden oder Laserdioden vorgesehen sind.

## Claims

1. A device for the measurement of the velocity of independently moving surfaces of objects, without being in contact with them, that comprises a sensor (4) consisting of a semi-conducting substrate (5) on which are situated connected transducers of an opto-electronic transducer module, arranged in rows or columns over each of the contact strips (8,9), a signal pre-treatment and an optical device(3), which determines the dimension of the image of the object surface on the transducer module, as well as a light source (2) to illuminate the independently moving object surface (1), whereby a lattice-shaped, variable-location sensitivity distribution is established by the application of an electrical alternating field to the electrodes (17) of the contact strips (8,9), and whereby the frequency of the alternating field determines the velocity of the apparent movement of the sensitivity distribution, and, by evaluation of the sum of the signals of the two contact strip directions, two velocity components are determined.

2. A device according to Claim 1, in which the evaluation of the incident light photons by a location determined sensitivity is undertaken with the establishment of a lattice-modulation and in which the location wavelength of the lattice can be varied.

3. A device for the measurement of the velocity of independently moving surfaces of objects, without being in contact with them, that comprises a sensor (4) having opto-electronic transducers that have an active surface on which pictorial information is exhibited, and an optical device (3) which determines the dimensions of the image, as well as a light source (2) to illuminate the independently moving object surface (1), whereby the opto-electronic transducers are situated on a common semi-conductor substrate (5) and are connected in rows and columns by contact strips (8,9), in which the contact strips (8,9) as well as semi-permeable contact strips (8) are situated in columns on the light-facing side of the substrate and contact strips (9) are situated in rows on the underside of the substrate which is the side distal to the light source, and in which the sensor contains two m-channel amplifier stages (10) with m-control inputs (11), which are connected together by way of a delayed-action switch (12), whereby the amplifier stage (10) is connected at any given time, once with the rows and once with the columns, and each amplifier stage (10) is associated with one output for each of which one low graduation (14) is after-connected, and the outputs of the low graduation (14) are switched to frequency gauge (15) that is connected to an evaluation unit (16).

4. A device according to Claim 3, in which the m-channel amplifier stage (10) contains a multiplier (18), whereby the signal input of the multiplier (18) is connected to the electrode (17) of the contact strip, and attached to the accompanying steering input with the delayed action switch (12) whose stages (m-1) preferably possess the same delays, and in which each respective output is switched over an accumulator (19) onto the output of the amplifier stage.

5. A device according to Claim 3, in which the sensor (4), the low graduation (14), the frequency gauge (15) and the evaluation unit (16) are contained in a chip and, preferably, fixed on a common substrate.

6. A device according to Claim 3, in which the sensor (4) and the optical appliance (3) are arranged in a cylinder (21), and in which two light-beam sources (22) are situated on the side of the sensor, whereby a light tunnel is arranged over each light-beam source with a light-beam deflector in such a manner that the light cone (24) with the captured surface of the object is shielded.

7. A device according to Claim 6, in which the housing surface of the cylinder (21) is provided with a thread.

8. A device according to Claim 6, in which the light-beam sources (22) comprise light-emitting diodes or laser diodes

**Revendications**

1. Procédé pour le mesurage de vitesse sans contact de surfaces d'objet en mouvement avec un capteur (4), composé d'un substrat semi-conducteur (5), sur lequel se trouvent des transducteurs réunis en rangées ou en colonnes chaque fois par une des bandes de contact (8, 9), d'une zone à transducteurs optoélectroniques, d'un traitement préalable de signaux et d'une optique (3), qui définit l'échelle de l'image de la surface d'objet sur la zone à transducteurs, ainsi que d'un éclairage pour l'illumination de la surface d'objet en mouvement (1), **caractérisé en ce qu'**une répartition de sensibilité variable selon l'endroit en forme de réseau est réglée par l'établissement d'un champ électrique alternatif aux électrodes (17) des bandes de contact (8, 9), la fréquence du champ alternatif correspond à la vitesse du mouvement apparent de cette répartition de sensibilité et deux composantes de vitesse sont déterminées par exploitation des signaux cumulés des deux directions de bandes de contact.

2. Procédé suivant la revendication 1, **caractérisé en ce qu'** il est procédé à une évaluation des photons incidents par une sensibilité dépendant de l'endroit de telle manière qu'une modulation de réseau soit engendrée et que la longueur d'onde locale du réseau soit variable.

3. Disposition pour le mesurage de vitesse sans contact de surfaces d'objet en mouvement avec un capteur (4) avec des transducteurs optoélectroniques, qui comportent une surface active sur laquelle une information d'image est formée, et avec une optique (3) qui définit l'échelle de l'image, ainsi qu'avec un éclairage (2) pour l'illumination de la surface d'objet en mouvement (1), les transducteurs optoélectroniques se trouvant sur un substrat semi-conducteur commun (5) et étant réunis en colonnes ou en rangées au moyen de bandes de contact (8, 9), **caractérisée en ce que** les bandes de contact (8, 9) sont non seulement appliquées en tant que bandes de contact semi-translucides en colonnes sur la face du substrat tournée vers la lumière, mais également en tant que bandes de contact (9) en rangées sur le dessous du substrat ou sur la face détournée de la lumière, et le capteur comprend deux étages d'amplification à 'm' canaux (10) avec 'm' entrées de commande (11), qui sont reliés entre eux par une connexion de temporisation (12), l'étage amplificateur (10) étant à chaque fois disponible une fois pour les rangées et une autre fois pour les colonnes, et chaque étage amplificateur (10) dispose d'une sortie, à la suite de laquelle un filtre passe-bas (14) est chaque fois intercalé, et les sorties des filtres passe-bas (14) sont amenées à des fréquencemètres (15) sur lesquels une unité d'exploitation se connecte.

4. Disposition suivant la revendication 3, **caractérisée en ce que** l'étage ampilificateur à 'm' canaux (10) comporte pour chaque canal un multiplicateur (18), l'entrée de signal du multiplicateur (18) étant raccordée à l'électrode (17) de la bande de contact, et l'entrée de commande associée étant raccordée à la connexion de temporisation (12) composée de (m-1) étages engendrant de préférence les mêmes temporisations, et chaque sortie étant connectée à la sortie de l'étage amplificateur via un appareil totalisateur (19).

5. Disposition suivant la revendication 3, **caractérisée en ce que** le capteur (4), les filtres passe-bas (14), les fréquencemètres (15) et l'unité d'exploitation (16) se trouvent dans une seule puce et sont de préférence disposés sur un substrat commun.

6. Disposition suivant la revendication 3, **caractéri-**

**sée en ce que** le capteur (4) et l'optique (3) sont disposés dans un cylindre (21) et que deux sources de rayonnement (22) sont disposées latéralement par rapport au capteur, une gaine translucide (23) étant chaque fois disposée à la suite des sources de rayonnement avec une déflexion de rayons, de telle manière qu'il existe un recouvrement du cône lumineux (24) par les surfaces d'objet mesurées.

7.  Disposition suivant la revendication 6, **caractérisée en ce que** le cylindre (21) est pourvu d'un filet sur sa surface latérale.

8.  Disposition suivant la revendication 6, **caractérisée en ce que** des diodes électroluminescentes ou des diodes laser sont prévues pour les sources de rayonnement (22).

Fig. 1

EP 0 762 127 B1

EP 0 762 127 B1

9

Fig. 2

8  9  17  10  12

Z2

Y-Ausgang

X-Ausgang

17

10

Z1  12  12  12  12  12  12  12

4

8

5

9

**Fig. 3**

Fig. 4

**Fig. 5**